# EUROPEAN PATENT SPECIFICATION

(11) **EP 1 322 999 B1**
(45) Date of publication and mention of the grant of the patent: **17.09.2003**
(21) Application number: 02717049.7
(22) Date of filing: 08.03.2002
(51) Int. Cl.: G03B 23/12, G03B 21/16

(54) **PROJECTOR**
PROJEKTOR
PROJECTEUR

(30) Priority: 08.03.2001 IT MO20010039
(43) Date of publication of application: 02.07.2003
(73) Proprietor: Buroni, Paolo, 61043 Cagli (IT)
(72) Inventor: Buroni, Paolo, 61043 Cagli (IT)
(74) Representative: Leone, Mario
(86) International application number: IT0200145
(87) International publication number: WO02071149

(56) References cited:
- CH-A- 325 527
- DE-C- 421 372
- DE-C- 892 551
- DE-U- 8 525 628
- FR-A- 2 702 853
- GB-A- 588 932
- US-A- 3 712 725

## Description

The present invention refers to a projector, in particular of the type apt to project images, slides and films onto large-sized surfaces, and optionally in Multivision, i.e. with an array of projectors synchronised thereamong.

The use of specific image projectors onto large-sized surfaces in environments destined to entertainment like, e.g., discothèques and theatres has been widespread for quite some time. The surfaces onto which the images are projected do not necessarily require a specific preparation, optionally being the common walls of the projection premises, and hence exhibiting also all the uneven spots typical of a common wall: e.g. recesses, juts, openings, doors and windows, etc.

Of late years, this specific type of projections also involves outdoor environments, like fronts of monuments and palaces. The effect resulting from these projections is particularly enthralling and spectacular, capable of engendering/creating peculiar and evocative atmospheres.

This type of projections is best used during great multimedia shows and events involving vast spaces with monumental architectural surfaces, like e.g., the front of a castle or of a cathedral. Another putative field of use of said projections is that of scenic performances. Such surfaces constitute an exceptional screen for the projected images, requiring however projectors of ever-increasing candlepower.

The art has already studied and implemented projection units gradually improved with regard to the image rendering, the candlepower and, accordingly, the width of the outdoor surfaces to be used as projection screens. However, in the projectors used to date the employ of strong brilliances, i.e. of lamps characterised by an elevated candlepower and a greater concentration of the light beam, results in a disproportionate increase of the dimensions, of the weight and of the overall complexity thereof. This increase in turn causes non-negligible drawbacks.

In fact, considerable dimensions and weight, of up and beyond the 100 kg, can limit the use and the applications of such known-type projectors, which further require complex maintenance, lamp replacement and film loading interventions.

Apart from this major drawback, the known projectors are affected by further problems limiting the diffusion thereof.

In fact, the known-type projectors generally employ special and large-sized (up to 24x24 cm) films, which are hard to find on the market and to expose and develop, as few laboratories are adequately equipped therefor.

Above all in the case of the multivision, often the use of non-standard projectors, hence hardly found on the market, is required.

Another drawback of the known-type projectors lies in a possible imperfect positioning of the film due to slippage and deviations of the rotation rate of the take-up wheels with respect thereto.

The imperfect positioning of the film is particularly serious when, due to specific requirements, a multivision with the concomitant use of a plurality of projectors is carried out. In these cases, the required overlapping and/or concomitance of the images is compromised, with the decaying or the undoing of the desired visual effects. To date, the attempts to obviate this drawback resulted in the adoption of punched strips or the like onto the film edges. This punching entails high costs and requires the employ of skilled personnel.

Another drawback in the known-type projectors lies in the difficult cooling of the film subjected to ever-increasing candlepower, with temperatures onto the film that can even exceed the 200°C.

US 3,712,725 A (Eckerdt) discloses an adapter for enabling a slide tray projector to project film strip but intended to allow the view of images in proximity of the projector, thus no requiring special features for cooling the film strip.

DE 421,372 C (Rohde) discloses a film projector wherein an air flow is driven through the assembly supporting the film but not directly on the film, thus only allowing the heat removal from said assembly which is directly illuminated by the light source.

In both cases, means for holding the film are positioned at least in part outside the adapter or the assembly as well, to maintain the film (when not illuminated) in a cooler environment.

The technical problem underlying the present invention is that of providing a projector allowing to obviate the problem of the dimensions and of the excessive weight, allowing a greater effectiveness and an effective adaptation to elevated candlepowers, at the same time providing a substantial portability of the film to be projected in a specific housing to be directly mounted on the projector body.

This problem is solved by a projector as defined in claim 1.

The main advantage of the projector according to the present invention lies in subdividing the componentry so as to make more flexible and practical any function associated thereto, concomitantly remarkably reducing the bulks and the weights thereof.

As it will be apparent hereinafter, preferred embodiments of the projector enable to satisfy further needs.

In particular, a first object of the present projector is to implement a projector, employable in multivision, provided with high candlepower and yet being highly compact and weight-light, capable of using standard-type films, e.g. multisize 6x7 cm and 6x6 cm, or 70 mm and 24x36 ones with a simple adapter, with no need to add perforations to an unpunched film.

Other objects of the present invention are to manufacture a projector having a quick and reliable system for loading the film and also to provide the former with an effective forced cooling of the latter.

A further object of the present invention is to install an active frame synchronization system with a limited maximum error, e.g. of +/- 0.05 mm per 100 frames in the 6x7 cm format.

The present invention will hereinafter be described according to a preferred embodiment thereof, given by way of example and without limitative purposes, making reference to the attached drawings, wherein:
* figure 1 is a perspective view of a projector according to the invention, comprising a main body and a secondary body thereof;
* figure 2 is a perspective view of a detail associated to said secondary body;
* figure 3 is a perspective view of said secondary body incorporating the detail of figure 2;
* figure 4 is a perspective view of a specific attachment associated to said secondary body; and
* Figure 5 is a perspective view of said secondary body incorporating the specific attachment of figure 4.

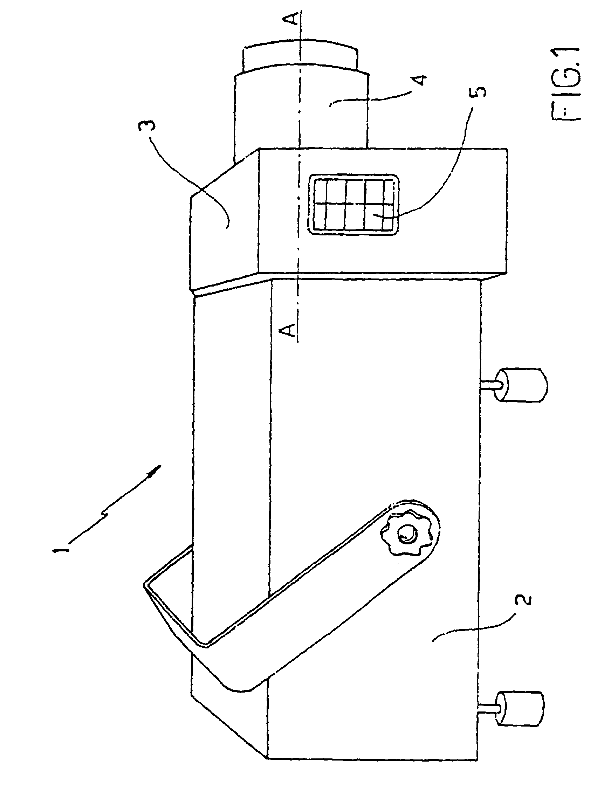

With reference to figure 1, the reference number 1 generally indicates a projector of the high candlepower type, i.e. destined to project onto wide surfaces, and apt to operate in multivision, which comprises a reciprocally detachable main body 2 and a secondary body 3. In particular, the main body 2 is boxed and parallelepiped-shaped, having a substantially horizontal development with a rear end, and a front end to which said body 3 is removably associated.

The main body 2 houses light generating means, i.e. lamps having the candlepower required for the projection over wide surfaces, a primary optical group which concentrates the light onto the film to be projected, and heat disposal means, i.e. suitable fans for forcedly cool the inside thereof, with vents and fins formed thereon. The body 2 will be made of a material having an elevated thermal conductivity, like anodised aluminium.

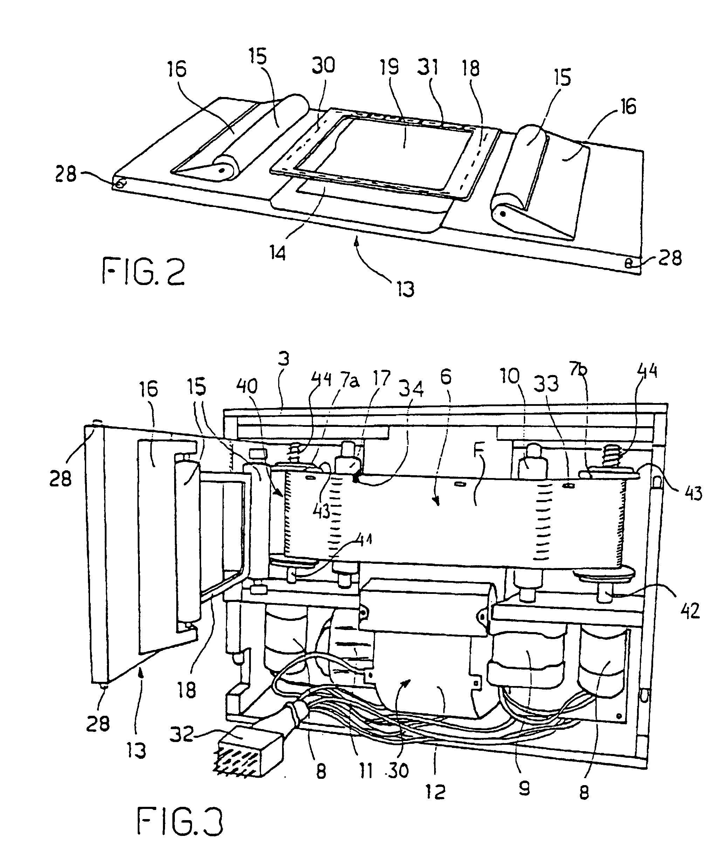

The secondary body 3 (figure 3) can be mounted onto the main body 2 by lever couplings 28. The former substantially forms the driving device of the film to be projected and it comprises an optical projection group 4, a control button strip 5 and means, generally indicated with 40, for holding and sliding a film.

Such means 40 hold a film F stretched on a projection area 6, the primary optical group of the main body 2 and the optical projection group 4 resting thereon. At each side of this area 6, the holding and sliding means 40 comprises on the one hand a wind shaft 41, onto which a film, initially wound on a start spool 7a, is mounted, and on the other hand a rewind shaft 42, about which a take-up spool 7b gradually winds up as the projection goes on.

Each shaft 41, 42 has a length such as to house films of different sizes, and moreover comprises, at a respective end, presser members 43, each kept pressed onto the top edge of the film F by a respective spring 44. The presser members keep the film F in the projection position. Said means 40 further comprises electrical and mechanical members apt to shift the film F stretched between the two spools 7a, 7b. These members are power-supplied via a dedicated outlet 32.

Among said electrical and mechanical members there are indicated two ratiomotors 8, each dedicated to said two spools 7a, 7b, a first motor drive 9 apt to generate a step-by-step motion, connected to a motor wheel 10 which is located adjacent to the rewind shaft 42.

The secondary body 3 further comprises means 30 for cooling the film, having a second motor drive 11 that actuates a radial-flow fan 12. In particular, the fan 12 is located at the bottom edge of the film in said projection area 6 and it generates a cooling flow tangential to both the surfaces of the film F, as well as substantially perpendicular to the path thereof.

At the back of the secondary body 3, i.e. at the portion thereof destined to contact the main body 2, there is located a first supporting plate 13. The latter, when it is completely constrained to the former, is parallel to the sliding direction of the film F and orthogonal to an axis of projection A-A. Said plate 13 has an opening 14 centered with respect to the axis of projection A-A. Said opening has dimensions not smaller than those of the frames impressed onto the film F.

With reference to figures 2 and 3, onto the surface of the first plate 13 facing the inside of the secondary body 3, two idle wheels 15 are constrained whose axis of rotation is orthogonal to the motion plane of the film. Each of said idle wheels is located in substantial correspondence to the vertical edges of the opening 14 and is constrained to a support 16, which in turn is elastically constrained to the first plate 13. Each of the two idle wheels 15, when said first plate is constrained to the secondary body 3, corresponds to and is into contact with two wheels constrained to the secondary body 3. The first wheel 17 is idle as well, whereas the second wheel 10 has already been defined as motor wheel, connected to the first motor drive 9.

Onto the surface of the first supporting plate 13 facing the inside of the secondary body 3 also a frame-shaped film pressure frame 18 is elastically constrained. The latter encloses an opening 19 having dimensions not smaller than those of the frames impressed onto the film F. The edges of said film pressure frame 18, which face said film F when the first plate 13 is constrained to the secondary body 3, are provided with a plurality of inserts of a non-stick material, e.g., PTFE.

Moreover, the bottom edge thereof is also provided with a plurality of nicks 31 oriented as the axes of rotation of the idle wheels 15. The radial-flow fan 12 is integrally constrained to the secondary body 3 and it is positioned below the film 6 with the air flow outlet mouth substantially centered with respect to the thickness of the latter, in order to ensure the tangentiality of the cooling flow.

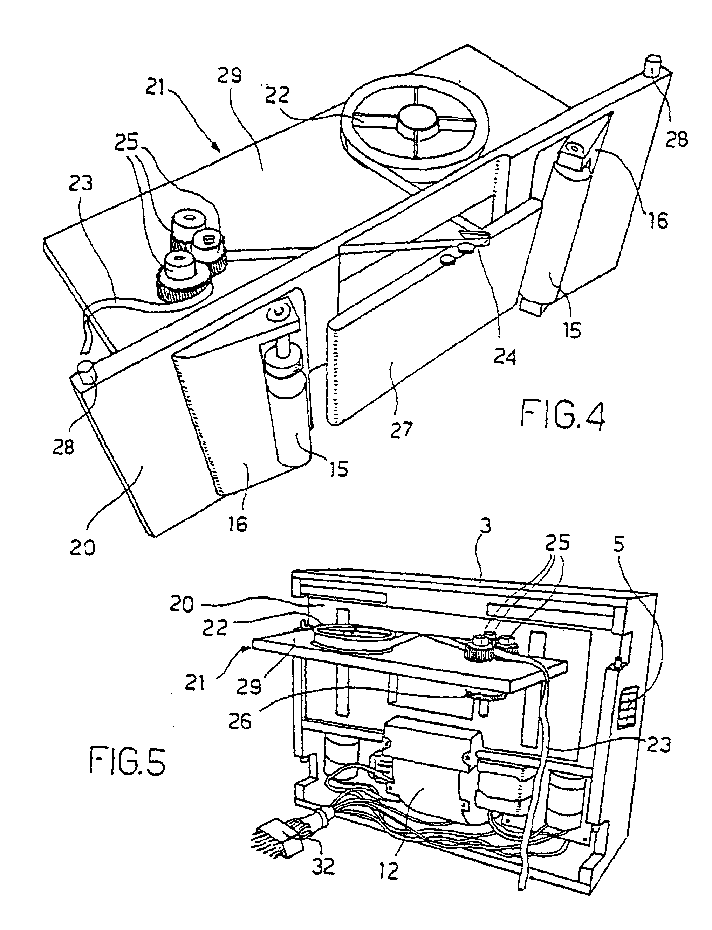

A second supporting plate 20 (Figure 4), identical in shape and dimensions to the first supporting plate 13, is interchangeable with the latter onto the secondary body 3. Said second plate is identical to the first plate also with regard to the idle wheels 15 and the related elastically constrained supports 16.

The second plate 20 bears a device 21 for applying marks 33 made of a shelf 29 which supports one idle spool 22. About the latter, a strip 23 is wound which supports a plurality of said marks.

The latter, of the label type, have dimensions of about 3x10 mm. An infrared sensor 34 is fork-shaped in order to embrace the edge of the film 6 along which the marks 33 are applied.

Said strip, in the unwinding thereof outside of said idle spool, is first inserted into an application station 24, and then into gripping members 25 made of three mutually cooperating and substantially cylinder-shaped members.

The axis of rotation of one of such gripping members is connected to shifting means 26 which are cooperating with one of the idle wheels 15, said shifting means made, in the illustrated device, of a pair of pulleys. To the shelf 29 also said gripping and shifting members are constrained.

The second plate 20 bears, onto the surface thereof facing the inside of the secondary body 3, a presser plate 27 made of a frame which, unlike the film pressure frame 18, is blind, having no opening. The presser plate 27 is elastically constrained to the second plate 20, analogously to the constraint of the film pressure frame 18 to the first plate 13. The application station 24 is constrained to the presser plate 27.

Both the first plate 13 and the second plate 20 are provided with identical fastening members 28, i.e. the said lever couplings, to the secondary body 3.

Hereinafter, the operation of the projector according to the present embodiment will be described, with particular reference to the secondary body 3.

When a projection is to be carried out, the secondary body 3 is parted from the main body 2 in order to insert the film F, and the first plate 13 is released from said secondary body making use of the fastening members 28.

Instead of completely releasing the first plate 13 from the secondary body 3, the former can even be only partially released, overturning it sideways as it is shown in Figure 3. Thus, the insertion of the film is particularly easy, taking place assembling the start spool 7a at the wind shaft 41 and hooking the free end of the film F to the rewind shaft 42.

Upon installing the film F, said first plate 13 is reapplied to the secondary body 3. Thus, the section of the former stretched onto the projection area 6 between the two spools 7a, 7b, is imprisoned between the two idle wheels 15 and the corresponding wheels 17, idle, and 10, motor.

By virtue of the elastic constraint provided to the supports 16 of the idle wheels 15, the latter always exert a steady pressure onto the corresponding rolls 17 and 10, ensuring at all times a steady pressure onto said film. To the rear surface of the film F the film pressure frame 18 adheres, by virtue of its constraint elastically yielding with respect to the first plate 13, factually concurring to keep the former perfectly planar at the axis of projection A-A. Then, the secondary body 3 can again be constrained to the main body 2 and, acting onto the control button strip 5, the film F is made to slide. Thus, the selecting of all the desired positions or frames and the storing thereof by means of the electronic management logic incorporated in the secondary body 3 of the projector 1 can be carried out. Such storing is apt to involve even more than 100 positions.

Then, the projection can be started and, at any command given by the control button strip 5 or even by a remote computer, the take-up device subject matter of the present invention will exactly position the film F onto the pre-stored spot.

In order to attain the total safety and accuracy for said film, and all the more so when plural projectors 1 are used, prior to the projection the following is carried out.

Upon mounting the film F into the secondary body 3 as abovedescribed, and releasing the main body 2 from the secondary body 3, the first plate 13 is removed from the latter. The film F is installed in the latter, and, in lieu of said first plate 13, the second plate 20 is constrained thereto, always making use of the fastening members 28.

By acting onto the control button strip 5, the film F will be set into motion and the marks 33 onto the strip 23 will quickly and automatically be applied by the applying device 21 over the entire length of said film at the rate of about one mark per each frame.

Said applying device places said marks onto the 3 mm edge of the frame, thereby without interfering in any way with the projection and without weakening the film F.

The rotary motion of the motor wheel 10 is contact-driven to the corresponding idle wheel 15, and therefrom, by the shifting members 26 and the gripping members 25, to the strip 23 unwinding from the idle spool 22. Passing the strip 23 into the application station 24, the desired applying of the marks 33 onto the film F is attained.

Apparently, the applying of said marks could abide to a laxer rule, also generating rather uneven spacing between the marks, entailing no drawbacks.

In fact, the electronic management logic incorporated in the secondary body 3 will automatically provide synchronicity during the projection. The marks 33 applied onto the film F are detected by the infrared sensor 34.

Said sensor 34 is apt to operate by dimming, i.e. each mark dims the infrared beam, whereas the film F is transparent thereto. The reading by a suitable sensor (not shown) of a single mark positioned onto the film edge facing that onto which the plurality of said marks is applied provides the reference for the starting of the wheel and the synchronising of the film F. Thus, the restoring of the position register after having turned off the projector, and even in the case of a blackout, is ensured.

The applying of the marks 33 can also take place with the secondary body 3 released from the main body 2, as said secondary body is provided with its own outlet 32.

Upon having applied said marks onto the film F, the second plate 20 is removed from the secondary body 3, in its place the first plate 13 is installed, and the projector 1 is ready to be used.

The sole step-by-step motor drive 9 is the main motor drive, and it determines the shifting rate and accuracy of the film F, whereas the two ratiomotors 8 serve as auxiliary motor drives and control the rewinding and the unwinding of the spools 7.

An advantage provided by the structure subject-matter of the present invention lies in the certainty that the sliding of the film F is free from position deviations even at the hundredth frame. The synchronism thereby attained compensates not merely the physiological mutual film/wheels sliding, but also any sliding due to mechanical problems, wear, dust, and film aging; The active synchronisation system of the present invention positions the frames with a maximum error of +/- 0.05 mm/100 (6x7 cm) frames.

Another advantage lies in the optimal cooling of the film whose two sides are concomitantly enveloped by the air flow outletted from the fan 12 positioned quite near and bottomwise to the film, in a position substantially true to the thickness thereof. There ensues the viability of a lamp exhibiting, frame size being equal, a higher candlepower, and, hence, of the projector.

Said advantage fosters other advantages, like the greater power and useful projection size, the higher brightness of the projected image and lower risks of heat-induced film deterioration, though with an extremely compact and handy projector.

A further advantage of the projector subject-matter of the present invention lies in the optional applying, automatically and within a few seconds, marks apt to synchronise the frames, with a wholly variable spacing between the same marks, as detectable by the electronic management logic incorporated into the secondary body.

This applying is attained using the second plate 20 interchangeable with the first plate 13. The presence of said marks onto the film F ensures, during the projection, a total accuracy in the shifting of said film regardless of any factor apt to alter the normal unwinding thereof.

To the abovedescribed projector a person skilled in the art, in order to satisfy further and contingent needs, may effect several further modifications and variants, all however falling within the protective scope of the present invention, as defined by the appended claims.

## Claims

1. A projector (1), comprising:
* a main body (2), housing light generating means and heat disposal means; and
* a secondary body (3), removably associable to said main body (2), housing means (40) for holding and sliding a film (F) and an optical projection group (4),
**characterised in that** said secondary body houses means (30) for cooling said film (F) having a fan (12) having a flow outlet mouth positioned in the secondary body so as to be substantially centered with respect to the thickness of the film and located in operation at the bottom edge of the film (F), so as to generate a cooling flow tangential to both the surfaces of said film (F).

2. The projector (1) according to claim 1, wherein said means (40) for holding and sliding a film (F) comprises a film wind shaft (41) about which a film (F) initially wound on a start spool (7a) is wound, and a film rewind shaft (42), about which a take-up spool (7b) gradually winds up as the projection goes on, each shaft (41, 42) having a length such as to house films of different sizes.

3. The projector (1) according to claim 1, wherein said shafts (41, 42) comprise, at a respective end, presser members 43, each kept pressed onto the top edge of the film (F) by a respective spring (44), the presser members keeping the film (F) in the projection position.

4. The projector (1) according to claim 2, wherein the means (40) for holding and sliding comprises auxiliary motor drives (8) connected to said spools (7a, 7b) for the rewinding and the unwinding of the film.

5. The projector (1) according to claim 2, wherein the means (40) for holding and sliding comprises a step-by-step motor drive (9) connected to a motor wheel (10) cooperating with an idle wheel (17), both gripping the film (F) for the sliding thereof, the step-by-step motor drive (9) being apt to determine the shifting rate and accuracy of the film (F).

6. The projector (1) according to claim 1, comprising a first plate (13) constrainable to the secondary body (3) located parallel to the film section at a projection area (6) and orthogonal to an axis of projection (A-A) so as to form, when said first plate (13) is constrained to said secondary body (3), a wall thereof facing the projection optics (4) and so as to face a projection lamp inserted in the main body (2) when the secondary body (3) is constrained to said main body; said first plate being apt, when constrained to the secondary body (3), to keep the film (F) pressed between two idle wheels (15) and the corresponding wheels (10) and (17) of the secondary body (3) and it being apt, when released from said secondary body, to ease the mounting and the dismounting of the film (F) therefrom according to a direction substantially corresponding to the axis of projection (A-A).

7. The projector (1) according to claim 1, wherein to the secondary body (3) a first plate (13), interchangeable with a second plate (20) bearing a device (21) for applying marks (33), is constrainable.

8. Projector (1) according to claim 6, wherein the first plate (13) has an opening (14) which, when said first plate is constrained to the secondary body (3), is centered with respect to the axis of projection (A-A) and has dimensions not smaller than those of the frames impressed onto the film (F); onto the surface of said first plate (13) facing the inside of the secondary body (3) the at least two idle wheels (15) and a film pressure frame (18) are constrained.

9. The projector (1) according to claim 8, wherein said idle wheels (15) have the respective axes of rotation mutually parallel and positioned orthogonal to the sliding direction of the film (F); the idle wheels (15) are constrained to the first plate (13) in a position such as to be capable of cooperating, when said first plate is constrained to the secondary body (3), with the corresponding wheels (10, 17); the idle wheels (15) have supports (16) thereof constrained to the first plate (13) in an elastically yielding way, said elastic compliance being apt to ensure steadiness of pressure between said idle wheels (15) and the wheels (10, 17), said pressure being apt to ensure the normal unwinding of the film (6) between the idle wheels (15) and the wheels (10, 17); all the wheels (15, 17, 10) are coated with friction material, e.g. gummy material.

10. The projector (1) according to claim 9, wherein the film pressure frame (18) is substantially made of a frame enclosing an opening (19), true with respect to the axis of projection (A-A) and having dimensions not smaller than those of the frames impressed on the film (F); said frame (18) being constrained to the first plate (13) by elastic supports apt to give to said film pressure frame (18) a second compliance, it also of elastic type.

11. The projector (1) according to claim 10, wherein the edges of the frame making the film pressure frame (18) have the surface thereof facing the inside of the secondary body (3) provided with a plurality of inserts (35) of a non-stick material, e.g. PTFE.

12. The projector (1) according to claim 11, wherein the bottom edge of the film pressure frame (18) is provided with a plurality of nicks (31) oriented as the axes of rotation of the idle wheels (15); jointly to the scanty thickness of the film pressure frame (18), said nicks being apt to ease the air flow for cooling the film (6) outletted from the fan (12); the reduced thickness of the film pressure frame (18) being also apt to offer the least drag to the cooling air flow outletted from said fan.

13. The projector (1) according to claim 6, wherein the first plate (13) is provided with fastening members (28) apt to enable the mere upturning thereof with respect to the sliding plane of the film (F) as well as the complete releasing of said first plate from the secondary body (3).

14. The projector (1) according to claim 7, wherein said second plate (20) has shapes and dimensions identical to those of the first plate (13) and it is provided with identical idle wheels (15) and identical fastening means (28); the device (21) for applying marks (33) is apt to the applying, onto the film (6), of a plurality of said marks, said applying being viable solely when the second plate (20) is constrained to the secondary body (3) in lieu of the first plate (13); said marks being apt to form finder members aimed at restoring the synchronism of the frames in the case wherein the auxiliary drive motors, the motor drive (9) and/or the wheels (15, 17, 10) cause deviations in the sliding of the film (F).

15. The projector (1) according to claim 14, wherein the applying device (21) comprises a shelf (29) to which there are constrained: one idle spool (22) housing a strip (23) which supports a plurality of the marks (33); a plurality of gripping members (25) apt to grip and to shift the strip (23); shifting means (26) apt to shift said gripping members, said shifting being connected to at least one of the idle wheels (15), said connection being apt, when the second plate (20) is constrained to the secondary body (3), to drive the motion of the motor wheel (10) to the strip (23) eliminating the need of a dedicated motor drive.

16. The projector (1) according to claim 14, wherein onto the second plate (20), in lieu of the film pressure frame (18), there is constrained a plate (27) of the film (F) lacking in any opening; said pressure plate being constrained to the second plate (20) in an elastically yielding way; said pressure plate having a surface destined to contact said film coated with a layer of a non-stick material, e.g. PTFE.

## Patentansprüche

1. Projektor (1), der umfasst:
ein Hauptgehäuse (2), das eine Lichterzeugungseinrichtung und eine Wäᵣₘeableiteinrichtung aufnimmt; und
ein Nebengehäuse (3), das abnehmbar mit dem Hauptgehäuse (2) verbunden werden kann und eine Einrichtung (40) zum Halten und Verschieben eines Films (F) sowie eine optische Projektionsgruppe (4) aufnimmt,
**dadurch gekennzeichnet, dass** das Nebengehäuse eine Einrichtung (30) zum Kühlen des Films (F) aufnimmt, die ein Gebläse (12) mit einer Strömungsauslassöffnung aufweist, die in dem Nebengehäuse so angeordnet ist, dass sie im Wesentlichen in Bezug auf die Dicke des Films zentriert ist, die sich in Funktion am unteren Rand des Films (F) befindet, um so einen Kühlstrom tangential zu beiden Flächen des Films (F) zu erzeugen.

2. Projektor (1) nach Anspruch 1, wobei die Einrichtung (40) zum Halten und Verschieben eines Films (F) eine Filmaufspulwelle (41), auf die ein Film (F), der anfangs auf eine Anfangsspule (7) gewickelt ist, gewickelt wird, sowie eine Film-Rückspulwelle (42) umfasst, um die eine Aufwickelspule (7b) sich allmählich aufwickelt, wenn die Projektion abläuft, wobei jede Welle (41, 42) so lang ist, dass sie Filme unterschiedlicher Größen aufnimmt.

3. Projektor (1) nach Anspruch 1, wobei die Wellen (41, 42) an einem entsprechenden Ende Presselemente (43) umfassen, die jeweils durch eine entsprechende Feder (44) auf den oberen Rand des Films (F) gepresst werden, wobei die Presselemente den Film (F) in der Projektionsposition halten.

4. Projektor (1) nach Anspruch 2, wobei die Einrichtung (40) zum Halten und Verschieben Zusatzmotorantriebe (8) umfasst, die mit den Spulen (7a, 7b) zum Rückspulen und Abspulen des Films verbunden sind.

5. Projektor (1) nach Anspruch 2, wobei die Einrichtung (40) zum Halten und Verschieben einen Schrittmotorantrieb (9) umfasst, der mit einem Motor-Rad (10) verbunden ist, das mit einem Laufrad (17) zusammenwirkt, wobei beide den Film (F) zum Verschieben desselben ergreifen und der Schrittmotorantrieb (9) in der Lage ist, die Verschiebegeschwindigkeit und -genauigkeit des Films (F) zu bestimmen.

6. Projektor nach Anspruch 1, der eine erste Platte (13) umfasst, die an das Nebengehäuse (3) geklemmt werden kann und parallel zu dem Filmabschnitt in einem Projektionsbereich (6) und rechtwinklig zu einer Projektionsachse (A-A) angeordnet ist, so dass, wenn die erste Platte (13) an das Nebengehäuse (3) geklemmt ist, sie eine Wand bildet, die der Projektionsoptik (4) zugewandt ist und einer Projektionslampe zugewandt ist, die in das Hauptgehäuse (2) eingesetzt ist, wenn das Nebengehäuse (3) an das Hauptgehäuse geklemmt ist, wobei die erste Platte, wenn sie an das Nebengehäuse (3) geklemmt ist, in der Lage ist, den Film (F) zwischen zwei Laufräder (15) und die entsprechenden Räder (10) und (17) des Nebengehäuses (3) gepresst zu halten und, wenn sie von dem Nebengehäuse gelöst ist, in der Lage ist, das Einlegen und Herausnehmen des Films (F) daraus entsprechend einer Richtung, die im Wesentlichen der Projektionsachse (A-A) entspricht, zu erleichtern.

7. Projektor (1) nach Anspruch 1, wobei an das Nebengehäuse (3) eine erste Platte (13), die gegen eine zweite Platte (20) ausgetauscht werden kann, die eine Vorrichtung (21) zum Aufbringen von Markierungen (33) trägt, geklemmt werden kann.

8. Projektor (1) nach Anspruch 6, wobei die erste Platte (13) eine Öffnung (14) hat, die, wenn die erste Platte an das Nebengehäuse (3) geklemmt ist, in Bezug auf die Projektionsachse (A-A) zentriert ist, und Abmessungen hat, die nicht kleiner sind als die der auf den Film (F) gedruckten Bilder, wobei an die Fläche der ersten Platte (13), die der Innenseite des Nebengehäuses (3) zugewandt ist, die wenigstens zwei Laufräder (15) und ein Filmdruckrahmen (18) geklemmt werden.

9. Projektor (1) nach Anspruch 8, wobei die jeweiligen Drehachsen der Laufräder (15) parallel zueinander und rechtwinklig zur Verschieberichtung des Films (F) angeordnet sind und die Laufräder (15) in einer Position an die erste Ptatte (13) geklemmt werden, in der sie, wenn die erste Platte an das Nebengehäuse (3) geklemmt ist, mit den entsprechenden Rädern (10, 17) zusammenwirken können, Träger (16) der Laufräder (15) elastisch nachgebend an die erste Platte (13) geklemmt werden, wobei das elastische Nachgeben in der Lage ist, Stabilität von Druck zwischen den Laufräder (15) und den Rädern (10, 17) zu gewährleisten, und der Druck in der Lage ist, das normale Abspulen des Films (6) zwischen den Laufrädern (15) und den Rädern (10, 17) zu gewährleisten, wobei alle Räder (15, 17, 10) mit Reibmaterial, beispielsweise gummiartigem Material, beschichtet sind.

10. Projektor (1) nach Anspruch 9, wobei der Filmdruckrahmen (18) im Wesentlichen aus einem Rahmen besteht, der eine Öffnung (19) umschließt, die in Bezug auf die Projektionsachse (A-A) ausgerichtet ist und Abmessungen hat, die nicht kleiner sind als die der Bilder, die auf den Film (F) gedruckt sind, wobei der Rahmen (18) durch elastische Träger an die erste Platte (13) geklemmt wird, die in der Lage sind, dem Filmdruckrahmen (18) eine zweite, ebenfalls elastische Nachgiebigkeit zu verleihen.

11. Projektor (1) nach Anspruch 10, wobei die Flächen der Ränder des Rahmens, der den Filmdruckrahmen (18) bildet, die der Innenseite des Nebengehäuses (3) zugewandt sind, mit einer Vielzahl von Einsätzen (35) aus einem nichthaftenden Material, beispielsweise PTFE, versehen ist.

12. Projektor (1) nach Anspruch 11, wobei der untere Rand des Filmdruckrahmens (18) mit einer Vielzahl von Kerben (31) versehen ist, die als die Drehachsen der Laufräder (15) ausgerichtet sind, und zwar im Anschluss an die geringe Dicke des Filmdruckrahmens (18), wobei die Kerben in der Lage sind, den Luftstrom zum Kühlen des Films (16), der von dem Gebläse (12) ausgelassen wird, zu erleichtern und die geringere Dicke des Filmdruckrahmens (18) ebenfalls in der Lage ist, dem Kühlluftstrom, der von dem Gebläse ausgelassen wird, den geringsten Strömungswiderstand entgegenzusetzen.

13. Projektor (1) nach Anspruch 6, wobei die erste Platte (13) mit Befestigungselementen (28) versehen ist, die in der Lage sind, lediglich das Umdrehen derselben in Bezug auf die Verschiebeebene des Films (F) sowie das vollständige Lösen der ersten Platte von dem Nebengehäuse (3) zu ermöglichen.

14. Projektor (1) nach Anspruch 7, wobei die zweite Platte (20) Formen und Abmessungen hat, die mit denen der ersten Platte (13) identisch sind, und mit identischen Laufrädern (15) sowie identischen Befestigungseinrichtungen (28) versehen ist, wobei die Vorrichtung (21) zum Aufbringen von Markierungen (33) in der Lage ist, auf den Film (6) eine Vielzahl der Markierungen aufzubringen, das Aufbringen lediglich durchführbar ist, wenn die zweite Platte (20) statt der ersten Platte (13) an das Nebengehäuse (3) geklemmt ist, die Markierungen in der Lage sind, Sucherelemente zu bilden, die dazu dienen, die Synchronizität der Bilder für den Fall wieder herzustellen, dass die Zusatzantriebsmotoren, der Motorantrieb (9) und/oder die Räder (15, 17, 10) Abweichungen beim Verschieben des Films (F) verursachen.

15. Projektor (1) nach Anspruch 14, wobei die Aufbringvorrichtung (21) eine Ablage (29) umfasst, an die geklemmt sind: eine Laufspule (22), die einen Streifen (23) aufnimmt, der eine Vielzahl der Markierungen (33) trägt; eine Vielzahl von Greifelementen (25), die in der Lage sind, den Streifen (23) zu ergreifen und zu verschieben; eine Verschiebeeinrichtung (26), die in der Lage ist, die Greifelemente zu verschieben, wobei das Verschieben mit wenigstens einem der Laufräder (15) verbunden ist und die Verbindung, wenn die zweite Platte (20) an das Nebengehäuse (3) geklemmt ist, in der Lage ist, die Bewegung des Motorrades (10) auf den Streifen (23) zu übertragen, so dass kein spezieller Motorantrieb notwendig ist.

16. Projektor (1) nach Anspruch 14, wobei an die zweite Platte (20) statt des Filmpressrahmens (18) eine Platte (27) des Films (F) geklemmt ist, die keinerlei Öffnung aufweist, die Druckplatte elastisch nachgebend an die zweite Platte (20) geklemmt wird und eine Fläche der Druckplatte, die mit dem Film in Kontakt kommen soll, mit einer Schicht aus einem nichthaftendem Material, beispielsweise PTFE, beschichtet ist.

## Revendications

1. Projecteur (1), comportant :
un corps principal (2) recevant des moyens de génération de lumière et des moyens d'évacuation de chaleur, et
un corps secondaire (3) pouvant être associé de manière amovible audit corps principal (2), recevant des moyens (40) pour maintenir et faire glisser un film (F) et un groupe de projection optique (4),
**caractérisé en ce que** ledit corps secondaire reçoit des moyens (30) pour refroidir ledit film (F), ayant un ventilateur (12) comportant une embouchure de sortie d'écoulement positionnée dans le corps secondaire de manière à être sensiblement centrée par rapport à l'épaisseur du film, et positionnée en fonctionnement au niveau du bord inférieur du film (F), de manière à générer un écoulement de refroidissement tangentiel aux surfaces dudit film (F).

2. Projecteur (1) selon la revendication 1, dans lequel lesdits moyens (40) pour maintenir et faire glisser un film (F) comporte un arbre d'enroulement de film (41) autour duquel est enroulé un film (F) enroulé initialement sur une bobine de départ (7a), et un arbre de rembobinage de film (42), autour duquel une bobine de réceptrice (7b) dévide graduellement lorsque la projection a lieu, chaque arbre (41, 42) ayant une longueur pour recevoir des films de différentes dimensions.

3. Projecteur (1) selon la revendication 1, dans lequel lesdits arbres (41, 42) comportent, au niveau d'une extrémité respective, des éléments formant presseur (43), chacun étant maintenu exerçant une pression sur le bord supérieur du film (F) par un ressort respectif (44), les éléments formant presseur maintenant le film (F) dans la position de projection.

4. Projecteur (1) selon la revendication 2, dans lequel les moyens (40) pour maintenir et faire glisser comportent des entraînements de moteur auxiliaires (8) connectés auxdites bobines (7a, 7b) pour rembobiner et dérouler le film.

5. Projecteur (1) selon la revendication 2, dans lequel les moyens (40) pour maintenir et faire glisser comportent un entraînement de moteur pas-à-pas (9) connecté à une roue de moteur (10) coopérant avec une roue montée folle (17), les deux saisissant le film (F) pour le faire glisser, l'entraînement de moteur pas-à-pas (9) pouvant déterminer la vitesse et la précision de déplacement du film (F).

6. Projecteur (1) selon la revendication 1, comportant une première plaque (13) pouvant être contrainte sur le corps secondaire (3), positionnée parallèlement au tronçon de film au niveau d'une zone de projection (6), et orthogonale à un axe de projection (A-A) de manière à former, lorsque ladite première plaque (13) est contrainte sur ledit corps secondaire (3), une paroi de celui-ci en vis-à-vis des éléments optiques de projection (4), et de manière à faire face à une lampe de projection insérée dans le corps principal (2) lorsque le corps secondaire (3) est contraint sur ledit corps principal, ladite première plaque étant capable, lorsque contrainte sur le corps secondaire (3), de maintenir le film (F) pressé entre deux roues montées folles (15) et les roues correspondantes (10) et (17) du corps secondaire (3) et étant capable, lorsque libérée dudit corps secondaire, de faciliter le montage et le démontage du film (F) à partir de celle-ci selon une direction correspondant sensiblement à l'axe de projection (A-A).

7. Projecteur (1) selon la revendication 1, dans lequel une première plaque (13), interchangeable avec une seconde plaque (20) supportant un dispositif (21) pour appliquer des marques (33), peut être contrainte sur le corps secondaire (3).

8. Projecteur (1) selon la revendication 6, dans lequel la première plaque (13) a une ouverture (14) qui, lorsque ladite première plaque est contrainte sur le corps secondaire (3), est centrée par rapport à l'axe de projection (A-A), et a des dimensions qui ne sont pas inférieures à celles des cadres imprimés sur le film (F), les au moins deux roues montées folles (15) et un cadre de pression de film (18) étant contraints sur la surface de ladite première plaque (13) en vis-à-vis de l'intérieur du corps secondaire (3).

9. Projecteur (1) selon la revendication 8, dans lequel lesdites roues montées folles (15) ont les axes de rotation respectifs mutuellement parallèles et positionnés de manière orthogonale par rapport la direction de glissement du film (F), les roues montées folles (15) sont contraintes sur la première plaque (13) dans une position de manière à pouvoir coopérer avec les roues correspondantes (10, 17) lorsque ladite première plaque est contrainte sur le corps secondaire (3), les roues montées folles (15) ont leurs supports (16) contraints sur la première plaque (13) d'une manière extensible élastiquement, ladite souplesse élastique étant capable d'assurer une régularité de pression entre lesdites roues montées folles (15) et les roues (10, 17), ladite pression étant capable d'assurer le déroulement normal du film (6) entre les roues montées folles (15) et les roues (10, 17), toutes les roues (15, 17, 10) sont revêtues d'un matériau de frottement, par exemple un matériau gommeux.

10. Projecteur (1) selon la revendication 9, dans lequel le cadre de pression de film (18) est sensiblement constitué d'un cadre enfermant une ouverture (19), calée par rapport à l'axe de projection (A-A) et ayant des dimensions qui ne sont pas inférieures à celles des cadres imprimés sur le film (F), ledit cadre (18) étant contraint sur la première plaque (13) par des supports élastiques pouvant donner une seconde souplesse également de type élastique au cadre de pression de film (18).

11. Projecteur (1) selon la revendication 10, dans lequel les bords du cadre constituant le cadre de pression de film (18) ont leur surface dirigée vers l'intérieur du corps secondaire (3) munie d'une pluralité de pièces rapportées (35) constituées d'un matériau non-collant, par exemple du PTFE.

12. Projecteur (1) selon la revendication 11, dans lequel le bord inférieur du cadre de pression de film (18) est muni d'une pluralité d'encoches (31) orientées comme les axes de rotation des roues montées folles (15), conjointement à l'épaisseur limitée du cadre de pression de film (18), lesdites encoches pouvant faciliter l'écoulement d'air produit par le ventilateur (12) pour refroidir le film (6), l'épaisseur réduite du cadre de pression de film (18) pouvant également offrir la moindre traînée à l'écoulement d'air de refroidissement produit par ledit ventilateur.

13. Projecteur (1) selon la revendication 6, dans lequel la première plaque (13) est munie d'éléments de fixation (28) pouvant permettre le renversement plus simple de celle-ci par rapport au plan de glissement du film, (F) ainsi que la libération complète de ladite première plaque à partir du corps secondaire (3).

14. Projecteur (1) selon la revendication 7, dans lequel ladite seconde plaque (20) a des formes et dimensions identiques à celles de la première plaque (13), et elle est munie de roues montées folles identiques (15) et de moyens de fixation identiques (28), le dispositif (21) pour appliquer des marques (33) est apte à appliquer une pluralité desdites marques sur le film (6), ladite application étant possible seulement lorsque la seconde plaque (20) est contrainte sur le corps secondaire (3) à la place de la première plaque (13), lesdites marques pouvant être formées d'éléments de viseur ayant pour but de restaurer le synchronisme des cadres dans le cas où les moteurs d'entraînement auxiliaires, l'entraînement de moteur (9) et/ou les roues (15, 17, 10) provoquent des déviations dans le glissement du film (F).

15. Projecteur (1) selon la revendication 14, dans lequel le dispositif d'application (21) comporte une étagère (29) sur laquelle sont contraints : une bobine montée folle (22) recevant une bande (23) qui supporte une pluralité de marques (33), une pluralité d'éléments de saisie (25) aptes à saisir et à décaler la bande (23), des moyens de décalage (26) aptes à décaler lesdits éléments de saisie, ledit décalage étant connecté à au moins une des roues montées folles (15), ladite connexion étant apte, lorsque la seconde plaque (20) est contrainte sur le corps secondaire (3), à entraîner le déplacement de la roue de moteur (10) vers la bande (23), en éliminant le besoin d'un entraînement de moteur dédiée.

16. Projecteur (1) selon la revendication 14, dans lequel, sur la seconde plaque (20), à la place du cadre de pression de film (18), est contrainte une plaque (27) du film (F) manquant d'une quelconque ouverture, ladite plaque de pression étant contrainte sur la seconde plaque (20) de manière souple élastiquement, ladite plaque de pression ayant une surface destinée à venir en contact avec ledit film revêtu d'une couche d'un matériau non-collant, par exemple du PTFE.
